(19) Europäisches Patentamt
European Patent Office
Office européen des brevets

(11) **EP 1 377 884 B1**

(12) **EUROPÄISCHE PATENTSCHRIFT**

(45) Veröffentlichungstag und Bekanntmachung des Hinweises auf die Patenterteilung:
**13.08.2008 Patentblatt 2008/33**

(21) Anmeldenummer: **02722178.7**

(22) Anmeldetag: **05.03.2002**

(51) Int Cl.:
**G05B 19/401** (2006.01)

(86) Internationale Anmeldenummer:
**PCT/EP2002/002386**

(87) Internationale Veröffentlichungsnummer:
**WO 2002/073327 (19.09.2002 Gazette 2002/38)**

(54) **KOORDINATENMESSGERÄT**

CO-ORDINATE MEASURING DEVICE

APPAREIL DE MESURE DE COORDONNEES

(84) Benannte Vertragsstaaten:
**DE FR GB IT**

(30) Priorität: **10.03.2001 DE 10111540**

(43) Veröffentlichungstag der Anmeldung:
**07.01.2004 Patentblatt 2004/02**

(73) Patentinhaber: **Carl Zeiss Industrielle Messtechnik GmbH**
**73447 Oberkochen (DE)**

(72) Erfinder:
• **RÖGELE, Rudolf**
**89551 Königsbronn (DE)**
• **KALMBACH, Dieter**
**89568 Hermaringen (DE)**

(74) Vertreter: **Henckell, Carsten**
**Carl Zeiss**
**Patentabteilung**
**73446 Oberkochen (DE)**

(56) Entgegenhaltungen:
**DE-A- 19 821 372          US-A- 5 491 638**

• **WOCKE P: "KMG AUTOMATISCH PROGRAMMIEREN GENERIERUNG, VISUALISIERUNG UND MODIFIZIERUNG VON ANTASTPUNKTEN UND VERFAHRWEGEN" F & M. FEINWERKTECHNIK MIKROTECHNIK MESSTECHNIK, CARL HANSER GMBH, MUNCHEN, DE, Bd. 102, Nr. 4, 1. April 1994 (1994-04-01), Seiten 181-186, XP000446402 ISSN: 0944-1018**

**Beschreibung**

Die Erfindung betrifft ein Koordinatenmeßgerät zum Vermessen von Werkstücken mit wenigstens einem Taststift der an einem in den Koordinatenrichtungen verfahrbaren Tastkopf befestigbar ist, wobei der Taststift oder die Taststifte Schäfte aufweisen an deren Enden jeweils ein Antastkörper befestigt ist und wobei wenigstens zwei der Schäfte bei bestimmungsgemäßer Befestigung des betreffenden Taststiftes oder der betreffenden Taststifte am Tastkopf eine unterschiedliche Ausrichtung aufweisen und mit einer Steuer- und Auswerteeinheit zum Steuern des Meßablaufes und zur Auswertung der hierbei aufgezeichneten Meßpunkte.

Ein Verfahren zur Steuerung eines derartigen Koordinatenmeßgerätes ist beispielsweise in unserem US Patent US 5,491,638 beschrieben. Zur Abtastung des eine Vielzahl von Geometrieelementen umfassenden Werkstückes stehen hierbei eine Vielzahl von unterschiedlichen Taststiften zur Verfügung, die auswechselbar am in den Koordinatenrichtungen beweglichen Tastkopf des Koordinatenmeßgerätes befestigt werden können. Dazu sind die Taststifte am Rande des Meßbereiches in einem entsprechenden Magazin gelagert. Die Taststifte weisen hierbei Schäfte mit unterschiedlicher Ausrichtung auf, an deren Enden Antastkörper in Form einer Tastkugel befestigt sind. Zur Vermessung der unterschiedlichen Geometrieelemente des Werkstückes werden hierbei unterschiedliche Tasterschäfte mit deren hieran befestigten Antastkörpern verwendet.

Der Meßablauf zum Vermessen eines Geometrieelementes kann hierbei grundsätzlich auf zwei verschiedene Arten generiert werden. Die erste Möglichkeit ist die automatische Generierung aus CAD-Daten des Werkstückes. Hierbei werden für ein anzutastendes Geometrieelement automatisiert aus den CAD-Daten des Werkstückes die anzutastenden Meßpunkte auf dem Geometrieelement generiert. Beispielsweise könnten automatisiert zur Vermessung einer ebenen Fläche des Werkstückes, die durch das Geometrieelement "Ebene" dargestellt wird, automatisiert ein zweidimensionales Meßpunktraster erstellt werden, das die auf der Ebene anzutastenden Punkte definiert. Alternativ können für das betreffende Geometrieelement in einem sogenannten Teach-In-Verfahren die anzutastenden Meßpunkte auch vom Bediener des Koordinatenmessgerätes aufgenommen werden. Dazu muss der Bediener des Koordinatenmessgerätes die gewünschten anzutastenden Punkte auf dem betreffenden Geometrieelement eines Werkstückes über das Koordinatenmessgerät antasten, wo bei das Koordinatenmessgerät in diesem Falle manuell vom Bediener des Koordinatenmessgerätes gesteuert wird.

Gemeinsam ist beiden Verfahren jedoch, dass derjenige, der den Maßablauf erstellt, einen oder mehr mehrere geeignete Tasterschäfte bestimmen muss, mit denen die Messpunkte des Geometireelementes abgetastet werden sollen. Dieses Verfahren ist zeitaufwendig, Insbesondere bei Messabläufen, in denen der Bediener des Koordintenmeßgerätes die abzutastenden Messpunkte in einem Teach-In-Verfahren aufnehmen muss, kommt es bei der Verwendung von komplexen Taststiften häufig dazu, dass der Bediener des Koordinatenmessgerätes versehentlich mit einem anderen Tasterschaft die anzutastenden Messpunkte auf dem Geometrieelement abtastet, als er dies im Betriebsprogramm des Koordinatenmessgerätes eingestellt hat. Dies führt dazu, dass völlig falsche Messwerte aufgezeichnet werden, was zur Folge hat, dass alle bislang gemessenen Messpunkte noch einmal erneut mit dem richtigen Tasterschaft aufgenommen werden müssen.

Aufgabe der vorliegenden Erfindung ist es deshalb ein Koordinatenmessgerät der eingangs genannten Art vorzuschlagen, mit dem zuverlässig ein Messablauf in kurzer Zeit bei gleichzeitig höherer Sicherheit in der Messpunktermittlung durchgeführt werden kann.

Die Aufgabe wird gemäß den kennzeichnenden Merkmalen des unabhängigen Anspruches 1 gelöst in dem wenigstens eine charakteristische Richtungsinformation für die zu messenden Messpunkte eines zu vermessenden Geometrieelementes auf dem Werkstück entweder aus gemessenen Messpunkten oder vordefinierten Solldaten des Geometrieelementes bestimmt wird und hieraus ein oder mehrere Tasterschäfte ermittelt werden, der oder die zur Vermessung der Messpunkte des Geometrieelementes geeignet sind.

Die Aufgabe wird des weiteren durch ein entsprechendes Verfahren gemäß dem unabhängigen Anspruch 12 gelöst.

Der Grundgedanke unserer Erfindung ist hierbei darin zu sehen, daß die Ermittlung eines oder mehrerer geeigneter Tasterschäfte zur Abtastung der Meßpunkte eines Geometrieelementes aus einer oder mehreren Richtungsinformationen des Geometrieelementes abgeleitet wird. Hierdurch ergibt sich gegenüber dem bislang bekannten Verfahren der erhebliche Vorteil, daß nunmehr in einem automatisierten Verfahren ein geeigneter Tasterschaft ermittelt werden kann und diese Daten nicht mehr vom Ersteller des Meßablaufes ermittelt und eingegeben werden müssen.

Der oder die als geeignet ermittelten Tasterschäfte können zur Vermessung des betreffenden Geometrieelementes geeignet vorgeschlagen werden.

Die Richtungsinformation kann hierbei entweder aus den CAD-Daten des Werkstückes, oder aber aus angetasteten Meßpunkten des zu vermessenden Geometrieelementes abgeleitet werden

An dieser Stelle soll der Begriff "Geometrieelement" definiert werden. Bei einem Geometrieelement handelt es sich um ein mathematisches Ersatzelement, das auf einem zu vermessenden Werkstück angetastet werden kann. Ein geeignetes Geometrieelement für eine Bohrung ist beispielsweise der Zylinder. Eine nicht abschließende Aufzählung von Geometrieelementen umfaßt hierbei den Punkt, die Ebene, die Freiformfläche, einen Kreis, einen Zylinder, einen Kegel, eine Ellipse, eine Kugel und einen Torus.

Als Richtungsinformation können hierbei eine Vielzahl von aus der Mathematik bekannten Größen verwendet werden. Beispielsweise könnte für das Geometrieelement Ebene eine Ebenengleichung verwendet werden. Durch die Ebenengleichung ist die Ausrichtung der Ebene eindeutig definiert. Besonders vorteilhaft wird man als Richtungsinformation jedoch Vektoren verwenden, da hiermit ein besonders einfaches Rechnen möglich ist. Die Ermittlung eines geeigneten Tasterschaftes kann dann sehr einfach erfolgen, in dem die Richtunginformation des Geometrieelementes, also beispielsweise der Vektor und die Längsrichtung eines Tasterschaftes gemeinsam einen definierten Winkel einschließen.

Als Richtungsinformation bei Außenelementen, wie beispielsweise einer von außen antastbaren Ebene, eines von außen antastbaren Zylinders oder einer Kugel eignen sich hierbei die Flächennormalen des Geometrieelementes in den anzutastenden Meßpunkten, daß heißt also die Vektoren, die in den anzutastenden Meßpunkten lotrecht auf die Oberfläche des Geometrieelementes stehen. Der Begriff Außenelement bedeutet hierbei, daß das betreffende Geometrieelement einfach zugänglich von außen gemessen werden kann, ohne mit dem Taststift in eine Bohrung, Vertiefung oder Aussparung des Werkstückes eindringen zu müssen. Hierbei kann vorteilhaft jedem einzelnen Meßpunkt ein eigener Vektor zugeordnet werden, wobei dann für jeden Meßpunkt einzeln ein geeigneter Tasterschaft vorgeschlagen wird. Dies ist insbesondere dann sinnvoll, wenn ein Geometrieelement nicht mit einem einzigen Tasterschaft vermessen werden kann. Alternativ reicht auch nur ein einzelner Vektor für das gesamte Geometrieelement, wenn feststeht, daß das gesamte Geometrieelement mit nur einem Tasterschaft vermessen werden kann. Soll beispielsweise nur ein kleines Kugelsegment einer Kugel vermessen werden, so reicht beispielsweise die Angabe der Flächenormalen im Zenit des zu vermessenden Kugelsegmentes. Bei einer Ebene reicht es die Flächennormale an einer beliebigen Stelle auf der Ebene zu bestimmen. Hieraus wird auch insbesondere klar, daß die Flächennormale nicht zwangsläufig mit einem zu messenden Punkt auf der Oberfläche des Werkstückes zusammenfallen muß.

Bei Innenelementen, wie beispielsweise einem Zylinder, der bei einer Bohrung abzutasten ist, sollte als Pichtungsinformation der Vektor in Richtung der Hauptachse des Geometrieelementes dienen. Der Begriff Innenelement bedeutet hierbei, daß das betreffende Geometrieelement nur gemessen werden kann, wenn mit dem Taststift in eine Bohrung, Vertiefung, oder Aussparung des Werkstückes eingetaucht wird.

Ein besonders geeigneter Tasterschaft sollte nunmehr derart ausgewählt werden, daß die Schaftrichtung weitestgehend parallel zur Flächennormalen bei Außenelementen oder zum Vektor entlang der Hauptachse bei Innenelementen ausgerichtet ist. Dies kann relativ einfach erfolgen, in dem der Winkel zwischen der Längsachse des Tästerschaftes und dem Vektor des Geometrieelementes berechnet wird. Hierdurch ergibt sich allerdings immer noch das Problem, daß zusätzlich eine Information bekannt sein muß, an welchem Ende des Tasterschaftes das Antastelement, wie beispielsweise die Tastkugel sitzt. Erheblich einfacher ist es nunmehr auch dem Tasterschaft einen Vektor zuzuordnen, dessen Längsrichtung die Ausrichtung des Tasterschaftes angibt und dessen Richtung anzeigt, an welchem Ende des Tasterschaftes der Antastkörper sitzt. In Abhängigkeit von der Richtungswahl des Vektors des Geometrieelementes und des Vektors des Tasterschaftes ergibt sich zwischen den Vektoren ein Winkel von 0˚ oder von 180˚.

Nur in wenigen Fällen wird diese Bedingung für die Meßpunkte eines abzutastenden Geometrieelementes erfüllbar sein. Beispielsweise für eine zu vermessende Kugel gibt es nur einen einzigen Meßpunkt, in dem die Flächennormale zum Vektor des Tasterschaftes den vorgegeben Winkel einhält. Vorzugsweise sollte deshalb ein Winkelbereich angegeben werden, innerhalb dessen der Winkel zwischen der Richtungsinformation des Geometrieelementes und dem Taster liegen sollten. Bei Verwendung des oben genannten Beispieles ergibt sich damit als Winkel zwischen dem Vektor des Geometrieelementes und dem Vektor des Tasterschaftes ein Winkel von 180˚ +/-ε oder 0˚ +/- e, wobei ε maximal 90˚ betragen sollte.

Aufgrund des relativ großen Winkelbereiches wird es mehrere Tasterschäfte geben, die als geeignet befunden werden. In diesem Fall wird derjenige Tasterschaft bevorzugt ausgewählt werden, der möglichst nahe am optimalen Winkel von 0˚ bzw. 180˚ liegt. Desweiteren können in Ausnahmesituationen zur Vermessung eines Geometrieelementes auch mehrere Tasterschäfte notwendig sein, wie dies Beispielsweise notwendig wird, wenn ein Großteil einer Kugel vermessen werden soll. Für diesen Fall wird man die Tasterschäfte in Abhängigkeit von den Richtungsvektoren des Geometrieelementes so wählen, daß möglichst wenige Tasterschäfte zur Vermessung des Geometrieelementes benötigt werden.

Wie bereits oben ausgeführt, kann es zur Erstellung oder Komplettierung des Meßablaufes notwendig sein, dass der Bediener des Koordinatenmeßgerätes in einem Teach-In-Verfahren die anzutastenden Meßpunkte auf einem Musterwerkstück über das Koordinatenmessgerät antasten muss. Hierbei kommt es bei komplexen Taststiften oftmals vor, daß der Bediener des Koordinatenmessgerätes im Betriebsprogramm des Koordinatenmessgerätes einen anderen Tasterschaft auswählt, als er dann zur späteren Aufnahme der Meßpunkte vom Programm als geeignet ermittelt wird. Bei herkömmlichen Koordinatenmeßgeräten hat dies zur Folge, daß alle zuvor aufgenommen Meßpunkte wieder von vorne erfaßt werden müßten. Gemäß einer vorteilhaften Weiterbildung der Erfindung kann die Steuer- und Auswerteeinheit bei der Abtastung des Geometrieelementes mit einem nicht vorgeschlagenen Tasterschaft die mit dem nicht vorgeschlagenen Tasterschaft abgetasteten Meßpunkte auf den vorgeschlagenen Tasterschaft umrechnen. Dies ist relativ einfach möglich, da für jeden Antastkörper Kalibrierdaten in der Steuer- und Auswerteeinheit gespeichert sind, die sowohl die Ablage eines definierten Punktes des betreffenden Antastkörpers gegenüber dem Maschinenkoordinatensystem definieren, wie auch dessen Geometrie. Für eine Tastkugel als Antastkörper ist beispielsweise die Ablage des Mittelpunktes der Tastkugel gegenüber dem Maschinenkoordinatensystem gespeichert, wie auch der Radius der Tastkugel. Diese Kalibrierdaten werden in einem Kalibriervorgang für jeden Antastkörper einzeln ermittelt.

Damit ist eine Umrechnung der mit einem ersten Antastkörper angetasteten Meßpunkte auf einen zweiten Antastkörper problemlos durch Vektorarithmetik möglich.

Weitere Vorteile und Weiterbildungen der Erfindung können den im folgenden im Zusammenhang mit den Figuren beschriebenen Ausführungsbeispielen entnommen werden. Hierin zeigen:

Figur 1: ein erfindungsgemäßes Koordinatenmeßgerät
Figur 2: einen Taststift (12) mit fünf Tasterschäften (14a-14e) unterschiedlicher Ausrichtung
Figur 3: einen einzelnen Tasterschaft (14e) des Tasters (12) gemäß Figur 2
Figur 4: Tasterschaftauswahl bei einem Außenelenzent (e)
Figur 5: Tasterschaftauswahl bei einem Innenelement (z)
Figur 6: Tasterschaftauswahl eines Tasterschaftes für die Geometrieelemente an einem Werkstück (15)
Figur 7: ein Werkstück (16) in der Vorderansicht mit einem anzutastenden Außenelement und einem anzutastenden Innenelement
Figur 8: Tasterschaftauswahl für ein Außenelement und ein Innenelement des Werkstückes (16) gemäß Figur 7
Figur 9: Verfahren zur Aufnahme der abzutastenden Meßpunkte eines Geometrieelementes in einem Teach-In-Verfahren und anschließende Umrechnung von Meßpunkten die mit einem nicht vorgeschlagenen Tasterschaft gemessen wurden auf den geeigneten Tasterschaft.

Figur 10: Darstellung der Aufnahme von Meßpunkten $(P_1-P_4)$ in einem Teach-In-Verfahren auf einem Geometrieelement (30) "Ebene" des Werkstückes (15) gemäß Figur 6
Figur 11: Darstellung der Umrechnung der mit einem falschen Tasterschaft (14c) gemessenen Meßpunkte $(P_1-P_4)$ gemäß Figur 6 auf einen geeigneten Tasterschaft (14d)

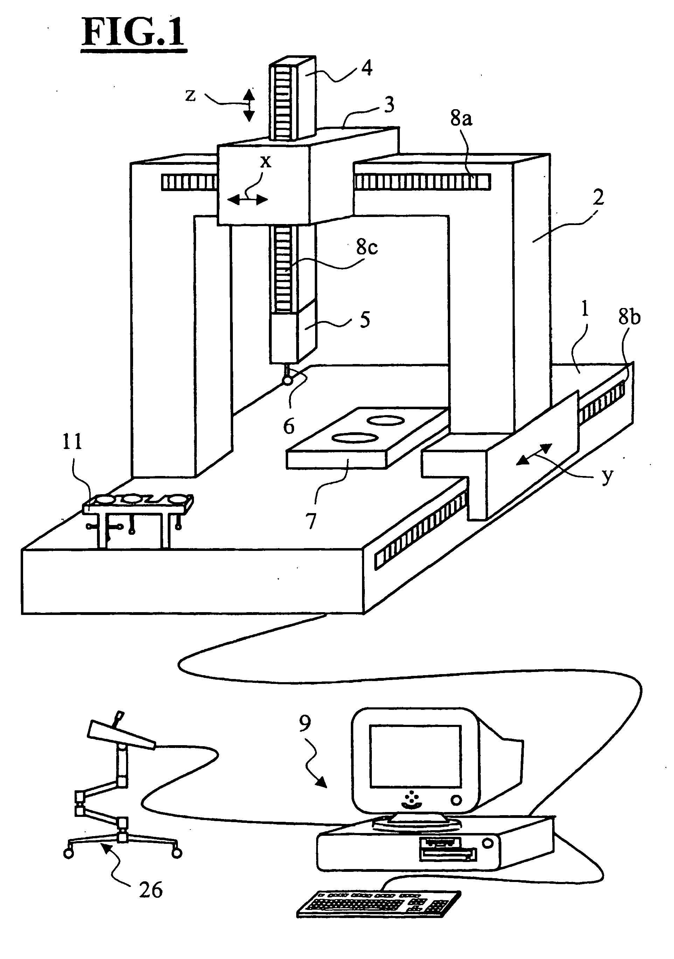

Figur 1 zeigt rein beispielhaft ein Koordinatenmeßgerät vom sogenannten Portaltyp. Das Koordinatenmeßgerät weist einen Taststift (6) auf, der auswechselbar an einem Tastkopf (5) befestigt ist und der gegenüber dem Tastkopf (5) in den drei Koordinatenrichtungen (x, y, z) ausgelenkt werden kann. Die Auslenkung des Taststiftes (6) in den drei Koordinatenrichtungen (x,y,z) wird über drei im Tastkopf (5) befindliche Meßgeber erfaßt. Der Tastkopf seinerseits kann in den drei Koordinatenrichtungen (x, y, z) bewegt werden. Dazu weist die Portalmechanik ein Portal (2) auf, das in der mit dem Pfeil (y) bezeichneten Richtung gegenüber dem Meßtisch (1) über Führungen verfahren werden kann. Entlang der den Meßtisch überspannenden Traverse des Portals (2) wiederum ist der sogenannte X-Schlitten (3) in der mit dem Pfeil (x) bezeichneten Richtung beweglich geführt. Am X-Schlitten (3) wiederum ist die Pinole (4) in der mit dem Pfeil (z) bezeichneten Richtung beweglich gerührt, so daß der Tastkopf (5) über die Portalmechanik in den drei Koordinatenrichtungen (x, y, z) verfahren werden kann. Die Vermessung eines Werkstückes erfolgt nunmehr derart, daß der Taststift (6) das zu vermessende Werkstück (7) an vorgesehenen Meßpunkten antastet, wobei im Tastkopf (5) die Auslenkung des Taststiftes (6) gegenüber dem Tastkopf (5) in den drei Koordinatenrichtungen (x,y,z) gemessen wird. Zusätzlich werden an den drei Inkrementalmaßstäben (8a-8c), die von optischen Ableseköpfen abgetastet werden, die aktuelle Position des Tastkopfes (5) in den drei Koordinatenrichtungen (x, y, z) gemessen. Zur Ermittlung eines Meßpunktes werden nunmehr die Maßstabsmeßwerte (8a-8c) mit den durch die Meßgeber im Tastkopf (5) ermittelten Taststiftauslenkungen komponentenrichtig verrechnet und hieraus ein Meßpunkt generiert.

Um nunmehr komplexe Werkstücke mit einer komplexen Geometrie vermessen zu können, werden üblicherweise unterschiedliche Taststifte benötigt, die im Magazin (11) vorgehalten werden und automatisiert über eine Wechseleinrichtung am Tastkopf (5) eingewechselt werden können. Natürlich würde für die Erfindung ein einziger Taststift mit mehreren unterschiedlichen Tasterschäften ausreichen, der nicht auswechselbar über beispielsweise eine Schraube am Tastkopf (5) befestigt ist. Die unterschiedlichen Taststifte weisen üblicherweise einen oder mehrere Tasterschäfte auf, an deren Enden Antastkörper, wie beispielsweise eine Tastkugel oder ein Zylinder befestigt sein können. Eine horizontale Bohrung beispielsweise wird man nur mit einem horizontal ausgerichteten Tasterschaft vermessen können, während eine vertikale Bohrung nur mit einem vertikal ausgerichteten Tasterschaft vermessen werden kann.

Zusätzlich weist das Koordinatenmeßgerät darüber hinaus hier nicht näher gezeigte Antriebe auf, über die das Portal (2) der X-Schlitten (3) und die Pinole (4) in den drei Koordinatenrichtungen (x, y, z) verfahren werden können. Die Steuerung des Meßablaufes und der Antriebe des Koordinatenmeßgerätes, sowie die Aufnahme und Auswertung der hierbei ermittelten Meßwerte erfolgt durch eine Steuer- und Auswerteeinheit (9), die hier in diesem Ausführungsbeispiel beispielhaft durch einen einzigen Rechner realisiert ist. Die Steuer- und Auswerteeinheit (9) ist zusätzlich mit einem Bedienpult (26) verbunden, mit dem über Bedienhebel das Koordinatenmeßgerät auch manuell in den Koordinatenrichtungen (x, y, z) verfahren werden kann, sowie auch andere Funktionen, wie beispielsweise ein Taststiflwechsel oder eine Bedienung des Meßprogramms vorgenommen werden können.

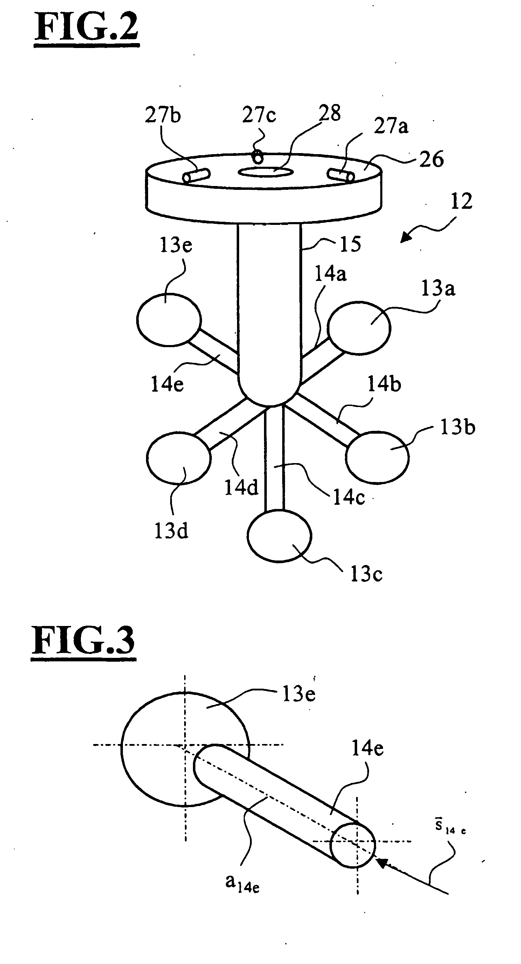

Figur 2 zeigt nunmehr einen rein beispielhaften Taststift (12), wie er beispielsweise im Magazin (11) des Koordinatenmeßgerätes gemäß Figur 1 vorliegen könnte. Der Taststift 12 weist hierbei einen Taststiftteller (26) auf, auf dem drei Zylinder (27a, 27b, 27c) derart verteilt sirid, dass die Längsachsen in einem Winkel von 120˚ zueinander stehen. In der Mitte des Taststifttellers (26) befindet sich ein ferromagnetisches Bauteil (28). Zur Aufnahme des Taststiftes (12) aus dem Magazin (11) gemäß Figur 1 und zur Befestigung am Tastkopf (5) wird das ferromagnetische Bauteil (28) von einer entsprechenden elektromagnetischen Einheit im Tastkopf (5) magnetisch gegen den Tastkopf gezogen, wobei die drei Zylinder (27a, 27b, 27c) auf entsprechend zugeordneten paarweise am Tastkopf (5) angeordneten Kugeln zum liegen kommen, sodaß hierdurch ein Dreipunktlager entsteht, durch das die Lagerung des Taststiftes (12) am Tastkopf (5) statisch eindeutig bestimmt ist.

Des Weiteren weist der Taststift (12) einen am Taststiftteller (26) befestigten Zentralschaft (15) auf, an dessen unterem Ende fünf Tasterschäfte (14a bis 14e) befestigt sind, die in unterschiedliche Richtungen ausgerichtet sind. An den Enden der Tasterschäfte (14a-14e) sind jeweils Antastkörper in Form von Tastkugeln (13a-13e) befestigt, die der Antastung des Werkstückes (7) dienen.

Figur 3 zeigt eine schematische Darstellung des Tasterschaftes (14e) und der hieran befestigten Tastkugel (13e) des Taster 12 gemäß Figur 2. Wie hierin zu sehen, ist dem hierin dargestellten Tasterschaft (14e) eine Längsachse ($a_{14c}$) zugeordnet, die hier beispielhaft durch den Mittelpunkt der Tastkugel (13e) und durch den Mittelpunkt des Profils des Tasterschaftes verläuft. Wie außerdem in Figur 3 zu sehen ist, ist hierbei dem Tasterschaft (14e) ein Vektor ($\bar{s}_{14e}$) zugeordnet, der in Richtung der Längsachse ($a_{14c}$) ausgerichtet ist. Der Fußpunkt des Vektors ($\bar{s}_{14c}$) zeigt in Richtung der Aufhängung des Tasterschaftes (14e) am Taststift und dessen Spitze in Richtung des Antastkörpers (13e). Selbstverständlich könnte der Vektor ($\bar{s}_{14e}$) auch um 180˚ verdreht definiert werden, falls dies gewünscht ist. In diesem Falle würde der Fußpunkt des Vektors ($\bar{s}_{14e}$) in Richtung des Antastkörpers (13e) zeigen während die Spitze des Vektors in Richtung der Aufhängung des Tasterschaftes (14e) weist.

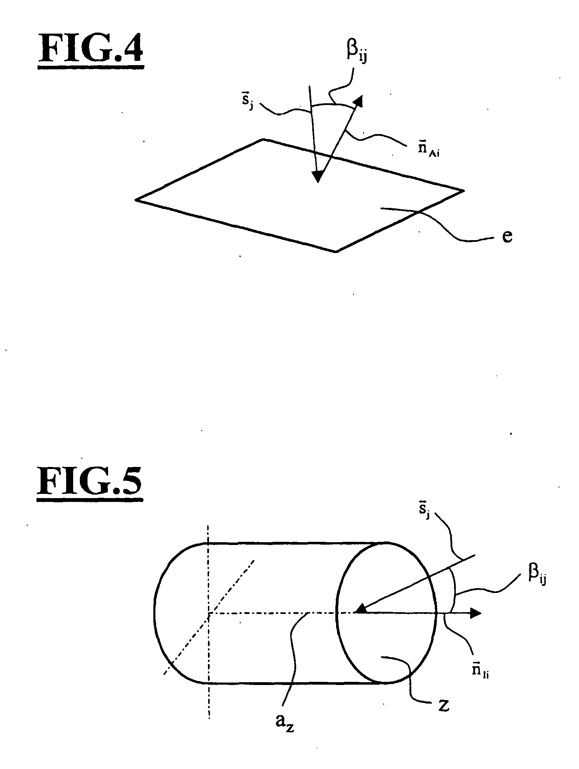

Wie nunmehr einer der fünf in Figur 2 dargestellten Tasterschäfte (14a-14e) zur Vermessung eines Geometrieelementes in erfindungsgemäßer Weise ausgewählt wird, soll nunmehr anhand der Figuren 4-8 erläutert werden.

Die Figur 4 zeigt hierbei als abzutastendes Geometrieelement rein schematisch eine Ebene (e), die als Außenelement gestaltet ist. Der Begriff Außenelement bedeutet hierbei, daß das betreffende Geometrieelement einfach zugänglich von außen gemessen werden kann, ohne mit dem Taststift in eine Bohrung, Vertiefung, oder Aussparung des Werkstückes eindringen zu müssen. Wie hierbei zu sehen, ist der Ebene (e) als Richtungsinfbrmation die Flächennormale ($\bar{n}_{Ai}$) zugeordnet, die einen Vektor verkörpert, der in einem anzutastenden Meßpunkt lotrecht auf das betreffende Geometrieelement steht. Selbstverständlich muß der Vektor ($\bar{n}_{Ai}$) nicht wie in Figur 4 dargestellt, vom Werkstück wegweisen. Vielmehr kann der Vektor ($\bar{n}_{Ai}$) genauso gut in Richtung des Werkstückes weisen. Zwischen jedem der Vektoren ($\bar{s}_j$) der unterschiedlichen. Tasterschäfte (14a-14e) des Taststiftes (12) gemäß Figur 2 und der Flächennormalen ($\bar{n}_{Ai}$) ergibt sich nunmehr ein Winkel ($\beta_{ij}$), den die beiden Vektoren ($\bar{s}_j$ und $\bar{n}_{Ai}$) miteinander einschließen. Wie bereits oben ausgeführt, wird einer der vorhandenen Tasterschäfte dann als geeignet vorgeschlagen, wenn die Flächennormale ($\bar{n}_{Ai}$) und der Vektor ($\bar{s}_j$) eines Tasterschaftes möglichst parallel stehen und das Antastelement am richtigen Ende des Tasterschaftes befestigt ist. Dies ist bezogen auf das hier gezeigte System dann der Fall, wenn der Vektor ($\bar{n}_{Ai}$) des Geometrieelementes und der Vektor ($\bar{s}_j$) des Tasterschaftes einen Winkel von 180˚ miteinander einschließen. Im Falle einer horizontalen Ebene hieße dies für den aus Figur 2 gezeigten Taster, daß der Tasterschaft (14c) mit dem Antastkörper (13c) ausgewählt würde. Es sei an dieser Stelle angemerkt, dass die verwendeten Indizes "i" stellvertretend für Bezeichnungen von Geometrieelementen verwendet werden. Die verwendeten Indizes "j" werden stellvertretend für die Bezeichnungen von zur Verfügung stehenden Tasterschäften verwendet. Der Index "A" steht bei den Vektoren "$\bar{n}$" für "Außenelement", der Index "I" für "Innenelement".

Für ein Innenelement, also ein Geometrieelement, bei dem der Tasterschaft in einer Aussparung oder Vertiefung zum Antasten eingefahren werden muß, verläuft die Ermittlung eines geeigneten Tästerschaftes ähnlich. Als beispielhaftes zu vermessendes Geometrieelement wird gemäß Figur 5 ein Zylinder (z) dargestellt, wie er beispielsweise bei einer Bohrung im Werkstück vorliegen könnte. Im Gegensatz zum Außenelement wird als Richtungsvektor ($\bar{n}_{Ii}$) hierbei ein Vektor in Richtung der Hauptachse ($a_z$) verwendet. Wie in Figur 5 ersichtlich, weist auch der Vektor ($\bar{s}_j$) jedes Tasterschaftes mit dem Vektor ($\bar{n}_{Ii}$) des Geometrieelementes (z) einen definierten Winkel ($\beta_{ij}$) auf, der, genau wie im Falle eines Außenelementes, im Idealfall 180˚ beträgt.

Der Winkel ($\beta_{ij}$) zwischen dem Vektor ($\bar{n}_{Ai}$ oder $\bar{n}_{Ii}$) eines Geometrieelementes und dem Vektor ($\bar{s}_j$) eines Tasterschaftes kann sehr einfach durch Vektormultiplikation errechnet werden. Da die Berechnung eines geeigneten Tasterschaftes für Außenelemente, wie auch für Innenelemente gleich erfolgt, wird vereinfachend sowohl für ($\bar{n}_{Ai}$) wie auch für ($\bar{n}_{Ii}$) der Terminus ($\bar{n}_i$) verwendet. Ermittelt man vom Vektor ($\bar{n}_i$) eines Geometrieelementes, wie auch von den Vektoren ($\bar{s}_j$) der Tasterschäfte jeweils den Einheitsvektor, d. h. also $|\bar{s}_j| = 1$ und $|\bar{n}_i| = 1$ so gilt nachfolgende Beziehung:

$$\text{Gleichung 1:} \quad \vec{s}_j \vec{n}_i = \left| \vec{s}_j \right| \left| \vec{n}_i \right| \cos(\beta_{ij})$$

Im Idealfall ist cos ($\beta_{ij}$) = -1, wenn der Winkel zwischen dem Vektor ($\bar{n}_i$) des Geometrieelementes und dem Vektor ($\bar{s}_j$) des Tasterschaftes 180˚ ist Wie bereits oben ausgeführt, ist diese Bedingung häufig nicht erfüllt. Um jedoch mit großer Sicherheit einen geeigneten Tasterschaft für eine Vielzahl von unterschiedlichen Geometrieelementen erhalten zu können, sollte deshalb zusätzlich ein Bereich ($\varepsilon$) um den Winkel ($\beta$) festgelegt werden, innerhalb dessen der Winkel zwischen dem Vektor ($\bar{n}_i$) des Geometrieelementes und dem Vektor ($\bar{s}_j$) des Tasterschaftes variieren kann. Es muß dann gelten:

$$\text{Gleichung 2: } \cos(\beta_{ij}) < \cos(180° +/- \varepsilon)$$

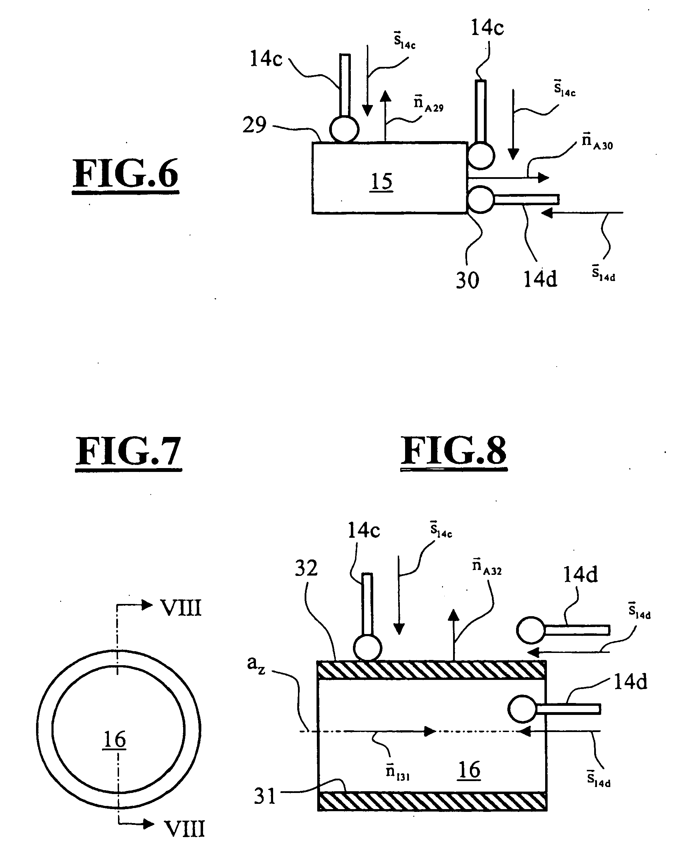

Der Bereich ($\varepsilon$) und sollte hierbei für jedes Geometrieelement einzeln festgelegt werden. Welche Überlegungen hierzu im einzelnen notwendig sind, soll nunmehr anhand der Figuren 6-8 erläutert werden.

Figur 6 zeigt hierbei ein quaderförmiges Werkstück (15) mit zwei zu vermessenden Ebenen (29,30) als Geometrieelemente. Da es sich um Außenelemente handelt, kann als Vektor der betreffenden Geometrieelemente die Flächennormale ($\bar{n}_{A29}$) und ($\bar{n}_{A30}$) verwendet werden. Zur Auswahl der horizontalen oberen Fläche (29) des Werkstückes (15) wird hierbei als Vektor die Flächennormale ($\bar{n}_{A29}$) mit den Vektoren ($\bar{s}_j$) der Tasterschafte (14a-14e) gemäß Figur 2 verglichen. Für den Schaft (14c) des Tasters (12) gemäß Figur 2 trifft hierbei exakt die Bedingung zu, daß der Vektor ($\bar{n}_{A29}$) des Geometrieelementes (29) und der Vektor ($\bar{s}_{14c}$) des Tasterschaftes (14c) einen Winkel von 180˚ einschließen, so daß der Tasterschaft (14c) als geeignet ausgewählt und vorgeschlagen wird. Für die vertikale Seitenfläche des Werkstückes (15), deren Geometrieelement "Ebene" mit dem Bezugszeichen (30) bezeichnet ist, wird vollkommen analog vorgegangen. Aufgrund obiger Überlegungen, nämlich daß die Flächennormale ($\bar{n}_{A30}$) mit dem Vektor ($\bar{s}_{14d}$) des Tasterschaftes (14d) einen Winkel von 180˚ einschließt, würde bei dem Taster (12) gemäß Figur 2 der Tasterschaft (14d) ausgewählt werden.

Gesetzt den Fall, dass der Taster (12) gemäß Figur 2 keinen Tasterschaft (14d) aufweisen würde und auch sonst kein Taststift des Magazins (11) gemäß Figur 1 einen Tasterschaft mit horizontaler Ausrichtung aufweisen würde, wäre genauso eine Vermessung des betreffenden Geometrieelementes (30) mit dem Tasterschaft (14c) möglich wie dies Figur 6 schematisch darstellt. Für diesen Fall steht der Vektor ($\bar{s}_{14c}$) des Tasterschaftes (14c) und der Vektor ($\bar{n}_{A30}$) des betreffenden Geometrieelementes (30) in einem Winkel von 90˚ zueinander. Läßt man für das Geometrieelement "Ebene" als Bereich ($\varepsilon$) maximal 90˚ zu, so ergäbe sich für die oben genannte Gleichung 2 also nachfolgende Ungleichung:

$$\text{Gleichung 3: } \quad \cos(\beta_{ij}) < 0$$

Figuren 7 und 8 zeigen analoge Überlegungen für ein anderes Werkstück (16), das sowohl einen abzutastenden Zylinder als Außenelement, wie auch einen abzutastenden Zylinder als Innenelement umfaßt. Figur 7 zeigt hierbei das Werkstück (16) in der Vorderansicht Figur 8 zeigt einen Schnitt des Werkstückes (16) nach Figur 7 entlang der Linie VIII-VIII. Für das Außenelement des Zylinders dient hierbei als Vektor ($\bar{n}_{A32}$) des betreffenden Geometrieelementes die Flächennormale in den abzutastenden Meßpunkten. Für den obersten Meßpunkt am Zylinder (16) ist dies der vertikal ausgerichtete Normalenvektor ($\bar{n}_{A32}$). Nach der obigen Bedingung würde bei Vergleich mit den Vektoren ($\bar{s}_j$) der möglichen Tasterschafte der Tasterschaft (14c) als geeignet ausgewählt werden, da der Vektor ($\bar{s}_{14c}$) des Tasterschaftes (14c) mit dem Vektor ($\bar{n}_{A32}$) des Geometrieelementes (32) in einem Winkel von 180˚ steht. Alternativ könnte nach obigen Überlegungen selbstverständlich auch der Tasterschaft (14d) verwendet werden, so daß der Bereich (e) auf +/- 90˚ festgelegt werden kann. Für das Innenelement des Zylinders sieht dies anders aus. Der Vektor ($\bar{n}_{131}$) des betreffenden Geometrieelementes (31) verläuft, wie bereits oben detailliert dargestellt, in Richtung der Hauptachse des Zylinders. Bei Auswahl nach dem obigen Prinzip würde der Tasterschaft (14d) ausgewählt werden, da dessen Vektor ($\bar{s}_{14d}$) einen Winkel von 180˚ mit dem Vektor ($\bar{n}_{131}$) des Geometrieelementes (31) "Zylinder" einschließt Würde hierbei, wie bei obigen Beispiel als Bereich ($\varepsilon$) maximal 90˚ zugelassen, so hätte dies zur Folge, daß gegebenenfalls der Tasterschaft (14c) ausgewählt werden könnte. In diesem Falle käme es zwangsläufig zu einer Kollision zwischen dem Werkstück (16) und dem Tasterschaft (14c), da dieser nicht in die Bohrung des Werkstückes (16) eingefahren werden könnte. Der Bereich ($\varepsilon$) muß deshalb für zylindrische Innenelemente sehr klein, beispielsweise 5˚ gewählt werden.

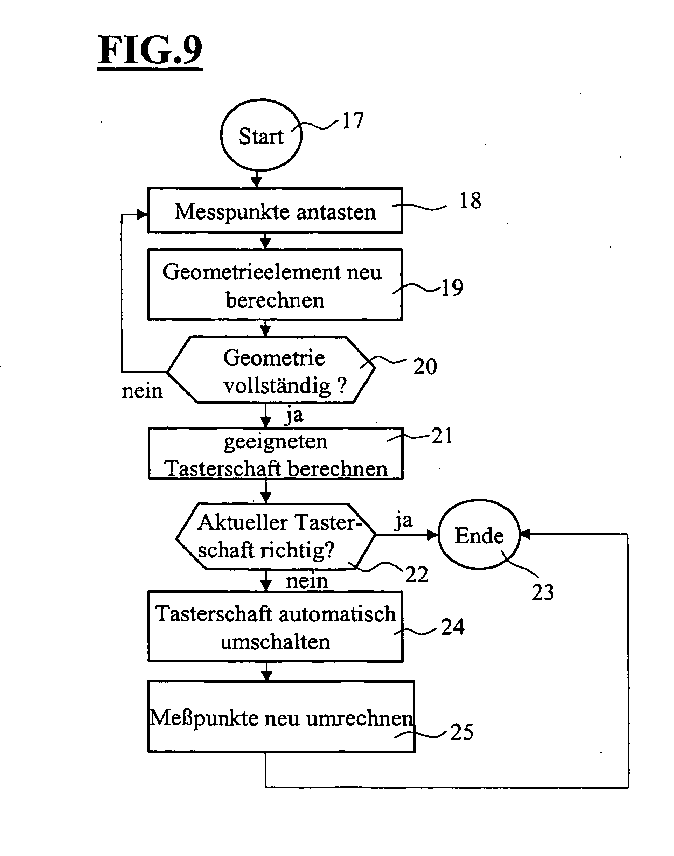

Wie bereits oben ausgeführt, kann der konkrete Meßablauf zu einem Geometrieelement unter anderem dadurch definiert werden, in dem das Koordinatenmeßgerät manuell gesteuert an einem Werkstück das betreffende Geometrieelement abtastet. Dieser Vorgang ist in dem Ablaufdiagramm in Figur 9 schematisch dargestellt. In Schritt (17) wird das Verfahren zur Aufnahme von abzutastenden Meßpunkten an einem Geometrieelement, wie beispielsweise des Innenzylinders einer Bohrung, begonnen. In Schritt (18) werden dazu an dem Geometrieelement nunmehr einzelne anzutastende Meßpunkte aufgenommen, wobei im Schritt (19) aus den aufgenommen angetasteten Punkten das Meßprogramm automatisiert die Einpassung eines vordefinierten Geometrieelementes vornimmt. Gemäß dem Schritt (20) werden die Schritte (18 und 19) solange wiederholt, bis alle Meßpunkte des Geometrieelementes vollständig sind.

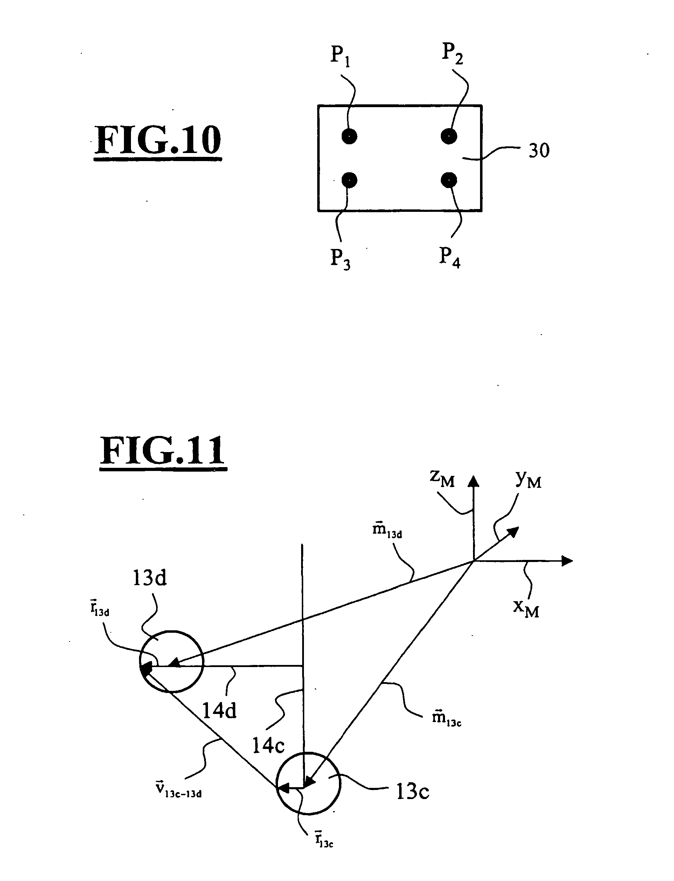

Wie dies beispielhaft aussehen könnte ist in Figur 10 gezeigt. Hierin wird das Geometrieelement (30) "Ebene" des Werkstückes (15) aus Figur 6 entsprechend den Schritten (18 bis 20) aus Figur 9 durch das Koordinatenmeßgerät angetastet. Hierbei werden beispielhaft vier Meßpunkte ($P_1$-$P_4$) aufgenommen, wobei durch die vier aufgenommenen Meßpunkte ($P_1$-$P_4$) dann nach dem Gaußschen Verfahren der kleinsten Fehlerquadrate eine Ebene eingepaßt wird.

Nachdem nunmehr alle Meßpunkte ($P_1$-$P_4$) aufgenommen sind, wird in Schritt (21) nunmehr nach obigem Vorgehen für das betreffende Geometrieelement ein geeigneter Tasterschaft bestimmt. Wie bereits oben im Zusammenhang mit Figur 6 erläutert würde die Steuer-und Auswerteeinheit (9) hierbei den Tasterschaft (14c) als besonders geeignet bestimmen. In Schritt (22) prüft die Steuer- und Auswerteeinheit (9) nunmehr, ob der aktuell verwendete Tasterschaft, mit dem die Meßpunkte in Schritt (18) in aufgenommen wurden dem geeigneten Tasterschaft entspricht. Falls dies nicht der Fall ist, beispielsweise weil der Bediener des Koordinatenmessgerätes den Tasterschaft (14c) zur Aufnahme der Meßpunkte ($P_1$-$P_4$) verwendet hat, so hätte dies bei herkömmlichen Meßprogrammen bedeutet, daß der Bediener des Koordinatenmeßgerätes alle bislang aufgenommen Meßpunkte ($P_1$-$P_4$) erneut aufnehmen muß und hierzu alle bisher durchlaufenen Verfahrensschritte erneut mit dem vorgeschlagenen Tasterschaft (14d) durchführen muß. In dieser besonders vorteilhaften Weiterbildung wird jedoch im Schritt (24) der Taster auf den richtigen Tasterschaft umgeschaltet und die angetasteten Meßpunkte in Schritt (25) auf den korrekten Tasterschaft umgerechnet.

Wie dies vorgenommen wird, soll anhand von Figur 11 beispielhaft beschrieben werden. Wie bereits oben ausgeführt, liegt die exakte Ablage des Mittelpunktes jedes Antastkörpers (13a-13e) gegenüber einem zentralen Maschinenkoordinatensystem und die geometrischen Daten des Antastkörpers (bei einer Tastkugel der Tastkugelradius) als gespeicherte Daten vor. Diese Daten werden, wie bei Koordinatenmeßgeräten üblich, in einem Kalibriervorgang bestimmt. Bezogen auf das oben im Zusammenhang mit Figur 9 und 10 beschriebene Beispiel ist also, wie Figur 11 dies beispielhaft zeigt, ein Vektor ($\bar{m}_{13c}$) bekannt, der die Ablage des Mittelpunktes des Antastkörpers (13c) gegenüber dem Maschinenkoordinatensystem ($x_M, y_M, z_M$) angibt, sowie ein Vektor ($\bar{m}_{13d}$) bekannt, der die Ablage des Mittelpunktes des Antastkörper (13d) gegenüber dem Maschinenkoordinatensystem ($x_M, y_M, z_M$) angibt. Außerdem sind die Radien der Tastkugeln (13c,13d) bekannt. Hieraus werden gemeinsam mit den Flächennormalen in den Meßpunkten ($P_1$-$P_4$) entsprechende Vektoren ($\bar{r}_{13c}$) und ($\bar{r}_{13d}$) ermittelt, die vom Mittelpunkt der Antastkörper (13c,13d) zu dem Punkt der Oberfläche der Antastkörper (13c,13d) weisen, indem diese die Werkstückoberfläche berühren. Die besagten Vektoren ($\bar{r}_{13c}$) und ($\bar{r}_{13d}$) müssen zwangsläufig parallel zueinander sein. Über einfache Vektorarithmetik kann nunmehr ein Verschiebevektor ($\bar{v}_{13c-13d}$) berechnet werden, um den alle Meßpunkte ($P_1$-$P_4$) verschoben werden müssen um auf den vorgeschlagenen Tasterschaft (14d) umgerechnet zu werden.

Die mit einem ersten Tasterschaft aufgenommen Meßpunkte können deshalb über einfache Vektorarithmetik auf den vorgeschlagenen Tasterschaft umgerechnet werden. Hierdurch kann der Bediener des Koordinatenmeßgerätes nunmehr für ein neues Geometrieelement gemäß Schritt (17) (siehe wieder Figur 9) mit der Aufnahme von Meßpunkten eines neuen Geometrieelementes beginnen.

Abschließend sei noch erwähnt, daß die Erfindung selbstverständlich nicht auf die in den Figuren 1-11 gezeigten Ausführungsbeispiele beschränkt ist. Vielmehr können selbstverständlich zahlreiche Änderungen vorgenommen werden. Beispielsweise muß es sich selbstverständlich nicht, wie in Figur 1 gezeigt, um ein Portalmeßgerät handeln. Vielmehr könnte selbstverständlich auch ein Ständermeßgerät, ein Brückenmeßgerät oder ein Roboterarm mit Drehgelenken zum Verfahren des Tastkopfes (5) in den Koordinatenrichtungen verwendet werden. Auch das Tastelement (13a-e) muß selbstverständlich nicht eine Tastkugel sein sondern kann beispielsweise ein Zylinder oder eine Spitze sein. Weiterhin muss natürlich der Tastkopf nicht zwingend ein messender Tastkopf sein, dessen Taststift in den drei Koordinatenrichtungen gegenüber dem Tastkopf auslenkbar ist. Es kann sich beispielsweise genauso um einen schaltenden Tastkopf handeln, durch den bei Berührung des Taststiftes mit dem Werkstück ein Signal erzeugt wird das zum Auslesen der Maßstabswerte führt. Natürlich muß der Taststift auch nicht auswechselbar am Tastkopf befestigt sein. Für die Erfindung reicht vielmehr ein einziger Taststift mit mehreren unterschiedlichen Tasterschäften, der nicht auswechselbar über beispielsweise eine Schraube am Tastkopf (5) befestigt ist.

## Patentansprüche

1. Koordinatenmessgerät zum Vermessen von Werkstücken (7, 15, 16) mit wenigstens einem Taststift (6, 12), der an einem in den Koordinatenrichtungen (x, y, z) verfahrbaren Tastkopf (5) befestigt werden kann, wobei der Taststift oder die Taststifte (6, 12) Schäfte (14a-14e) aufweisen, an deren Enden jeweils ein Antastkörper (13a-13e) befestigt ist und wobei wenigstens zwei der Schäfte bei bestimmungsgemäßer Befestigung des betreffenden Taststiftes (12) oder der betreffenden Taststifte am Tastkopf (5) eine unterschiedliche Ausrichtung aufweisen, und mit einer Steuer- und Auswerteeinheit (9) zum Steuern des Messablaufes und zur Auswertung der hierbei aufgezeichneten Messpunkte, **dadurch gekennzeichnet, dass** die Steuer- und Auswerteeinheit (9) Mittel aufweist, welche geeignet sind, wenigstens eine charakteristische Richtungsinformation ($\bar{n}_i$) für die zu messenden Punkte eines zu vermessenden Geometrieelementes (29, 30 31, 32) auf dem Werkstück (7, 15, 16) entweder aus gemessenen Messpunkten ($P_1 - P_4$) oder vordefinierten Solldaten des Geometrieelementes zu bestimmen, und einen oder mehrere Tasterschäfte (14a-14e), der oder die zur Vermessung der Messpunkte des Geometrieelementes (29, 30, 31, 32) geeignet sind, aus der oder den besagten Richtungsinformationen ($\bar{n}_i$) zu ermitteln.

2. Koordinatenmeßgerät nach Anspruch 1, **dadurch gekennzeichnet, daß** die Steuer- und Auswerteeinheit (9) als Richtungsinibnnation für das Geometrieelement wenigstens einen Vektor ($\bar{n}_i$) ermittelt.

3. Koordinatenmeßgerät nach Anspruch 2, **dadurch gekennzeichnet, daß** die Steuer- und Auswerteeinheit (9) auch jedem der Tasterschäfte (14a-14e) einen Vektor ($\bar{s}_j$) zuordnet, der in Längsrichtung des Tasterschaftes weist.

4. Koordinatenmeßgerät nach wenigstens einem der Ansprüche 1 bis 3, **dadurch gekennzeichnet, daß** die Steuer- und Auswerteeinheit (9) einen Tasterschaft als geeignet ermittelt, dessen Längsrichtung mit der Richtungsinformätion ($\bar{n}_i$) des Geometrieelementes einen definierten Winkel ($\beta_{ij}$) einschließt.

5. Koordinatenmeßgerät nach Anspruch 4, **dadurch gekennzeichnet, daß** die Steuer- und Auswerteeinheit (9) den Winkel ($\beta_{ij}$) als innerhalb eines vordefinierter Winkelbereiches ($\beta_{ij}+/-\varepsilon$) liegend voraussetzt.

6. Koordinatenmeßgerät nach einem der Ansprüche 2-5, **dadurch gekennzeichnet, daß** die Steuer- und Auswerteeinheit (9) als Vektoren ($\bar{n}_{Aj}$) des Geometrieelementes (29,30,32) bei Außenelementen die Flächennormale in wenigstens einem Punkt des Geometrieelementes verwendet.

7. Koordinatenmeßgerät nach einem der Ansprüche 2-6, **dadurch gekennzeichnet, daß** die Steuer- und Auswerteeinheit (9) als Vektoren ($\bar{n}_{Ii}$) des Geometrieelementes (31) bei Innenelementen den Vektor verwendet, der in Richtung der Hauptachse ($a_z$) des Geometrieelementes weist.

8. Koordinatenmeßgerät nach einem der Ansprüche 5 bis 7, **dadurch gekennzeichnet, daß** die Steuer- und Auswerteeinheit (9) den Winkel ($\beta_{ij}$) zwischen dem Vektor ($\bar{n}_i$) des Geometrieelementes und dem Vektor ($\bar{s}_j$) des Tasterschaftes als 180° +/-$\varepsilon$ oder als 0° +/- $\varepsilon$ definiert, wobei $\varepsilon$ einen Wert zwischen 0° und 90° annehmen kann.

9. Kootdinatenmeßgerät nach einem der vorhergehenden Ansprüche **dadurch gekennzeichnet, daß** die Steuer- und Auswerteeinheit (9) bei der Abtastung des Geometrieelementes mit einem nicht als geeignet ermittelten Tasterschaft die mit dem nicht als geeignet ermittelten Tasterschaft abgetasteten Meßpunkte auf den als geeignet ermittelten Tasterschaft umrechnet.

10. Koordinatenmeßgerät nach einem der vorhergehenden Ansprüche, **dadurch gekennzeichnet, daß** die Steuer- und Auswerteeinheit (9) das Geometrieelement mit dem als geeignet ermittelten Tasterschaft vennißt.

11. Koordinatenmeßgerät nach einem der vorhergehenden Ansprüche , **dadurch gekennzeichnet, daß** die Steuer- und Auswerteeinheit (9) für den Fall, daß kein geeigneter Tasterschaft gefunden wird eine Fehlermeldung ausgibt.

12. Verfahren zum Vermessen von Werkstücken auf einem Koordinatenmeßgerät mit wenigstens einem Taststift (12), der an einem in den Koordinatenrichtungen (x,y,z) verfahrbaren Tastkopf (5) befestigt werden kann, wobei der Taststift oder die Taststifte (12) Schäfte (14a-14e) aufweisen, an deren Enden jeweils ein Antastkörper (13a-13e) befestigt ist und wobei wenigstens zwei der Schäfte bei bestimmungsgemäßer Befestigung des betreffenden Taststiftes (12) oder der betreffenden Taststifte am Tastkopf (5) eine unterschiedliche Ausrichtung aufweisen, **gekennzeichnet durch** folgende Verfahrensschritte: - Bestimmung wenigstens einer charakteristischen Richtungsinformation ($\bar{n}_i$) für die zu messenden Punkte eines zu vermessenden Geometrieelementes (29-32) auf dem Werkstück (7,15,16) entweder aus gemessenen Meßpunkten ($P_1$-$P_4$) oder vordefinierten Solldaten des Geometrieelementes - Ermitteln eines oder mehrerer Tasterschäfte (14a-14e), der oder die zur Vermessung der Meßpunkte des Geometrieelementes (7,15,16) geeignet sind aus der oder den besagten Richtungsinformationen ($\bar{n}_i$).

**13.** Verfahren nach Anspruch 12, **dadurch gekennzeichnet, daß** als Richtungsinformation für das Geometrieelement wenigstens ein Vektor ($\bar{n}_i$) ermittelt.

**14.** Verfarhen nach Anspruch 13, **dadurch gekennzeichnet, daß** auch jedem der Tasterschäfte (14a-14e) ein Vektor ($\bar{s}_j$) zuordnet wird, der in Längsrichtung des Tasterschaftes weist.

**15.** Verfahren nach einem der Ansprüche 12 bis 14, **dadurch gekennzeichnet, daß** ein Tasterschaft (14a-14e) als geeignet ermittelt wird, dessen Längsrichtung mit der Richtungsinformation ($\bar{n}_i$) des Geometrieelementes einen definierten Winkel ($\beta_{ij}$) einschließt.

**16.** Verfahren nach Anspruch 15, **dadurch gekennzeichnet, daß** der Winkel ($\beta_{ij}$) innerhalb eines vordefinierter Winkelbereiches ($\beta_{ij}$+/-$\epsilon$) liegen muß.

**17.** Verfahren nach Anspruch 16, **dadurch gekennzeichnet, daß** der Winkel ($\beta_{ij}$) zwischen dem Vektor ($\bar{n}_i$) des Geometrieelementes und dem Vektor des Tasterschaftes 180˚ +/- $\epsilon$ oder 0˚ +/-$\epsilon$ ist, wobei ($\epsilon$) einen Wert zwischen 0˚ und 90˚ annehmen kann.

**18.** Verfahren nach einem der Ansprüche 13 bis 17, **dadurch gekennzeichnet, daß** der Vektor ($\bar{n}_{Ai}$) des Geometrieelementes (29,30,32) bei Außenelementen die Flächennormale des Geometrieelementes in wenigstens einem Punkt des Geometrieelementes ist.

**19.** Verfahren nach einem der Ansprüche 13 bis 18, **dadurch gekennzeichnet, daß** der Vektor ($\bar{n}_{Ii}$) des Geometrieelementes (31) bei Innenelementen ein Vektor in Richtung der Hauptachse des Geometrieelementes ist.

**20.** Verfahren nach einem der vorhergehenden Ansprüche 12 bis 19 **dadurch gekennzeichnet, daß** bei der Abtastung des Geometrieelementes mit einem nicht als geeignet ermittelten Tasterschaft die mit dem nicht als geeignet ermittelten Tasterschaft abgetasteten Meßpunkte ($P_1$-$P_4$) auf den als geeignet ermittelten Tasterschaft umgerechnet werden.

**21.** Verfahren nach einem der vorhergehenden Ansprüche 12 bis 20, **dadurch gekennzeichnet, daß** das Geometrieelement mit dem als geeignet ermittelten Tasterschaft vermessen wird.

**22.** Verfahren nach Anspruch 12 bis 21, **dadurch gekennzeichnet, daß** für den Fall, daß kein geeigneter Tasterschaft gefunden wird eine Fehlermeldung ausgegeben wird.

**Claims**

**1.** Coordinate measuring instrument for measuring workpieces (7, 15, 16), with at least one probe pin (6, 12) which can be fixed to a probe head (5) which can be moved in the coordinate directions (x, y, z), the probe pin or the probe pins (6, 12) having shafts (14a-14e) to whose ends in each case one scanning element (13a-13e) is fixed, and at least two of the shafts having a different alignment if the relevant probe pin (12) or the relevant probe pins are fixed to the probe head (5) in an appropriate manner, and with a control and evaluation unit (9) for controlling the measurement procedure and for evaluating the measurement points recorded here, **characterized in that** the control and evaluation unit (9) has means which are suitable for determining at least one characteristic directional information item ($\bar{n}_i$) for the points to be measured of a geometry element (29, 30, 31, 32) to be measured on the workpiece (7, 15, 16) either from measured measurement points ($P_1$-$P_4$) or predefined desired data of the geometry element, and for ascertaining one or more probe shafts (14a-14e) which are suitable for measuring the measurement points of the geometry element (29, 30, 31, 32) from said directional information ($\bar{n}i$).

**2.** Coordinate measuring instrument according to Claim 1, **characterized in that** the control and evaluation unit (9) ascertains at least one vector ($\bar{n}_i$) as directional information item for the geometry element.

**3.** Coordinate measuring instrument according to Claim 2, **characterized in that** the control and evaluation unit (9) also assigns to each of the probe shafts (14a-14e) a vector ($\bar{s}_j$) which points in the longitudinal direction of the probe shaft.

**4.** Coordinate measuring instrument according to at least one of Claims 1 to 3, **characterized in that** the control and evaluation unit (9) ascertains as suitable a probe shaft whose longitudinal direction encloses a defined angle ($\beta_{ij}$) with the directional information item ($\bar{n}_i$) of the geometry element.

5. Coordinate measuring instrument according to Claim 4, **characterized in that** the control and evaluation unit (9) assumes that the angle ($\beta_{ij}$) lies within a predefined angular range ($\beta_{ij}$+/-$\varepsilon$).

6. Coordinate measuring instrument according to one of Claims 2-5, **characterized in that** for external elements the control and evaluation unit (9) uses as vectors ($\bar{n}_{Ai}$) of the geometry element (29, 30, 32) the surface normal at at least one point of the geometry element.

7. Coordinate measuring instrument according to one of Claims 2-6, **characterized in that** for internal elements the control and evaluation unit (9) uses as vectors ($\bar{n}_{Ii}$) of the geometry element (31) that vector which points in the direction of the main axis ($a_z$) of the geometry element.

8. Coordinate measuring instrument according to one of Claims 5 to 7, **characterized in that** the control and evaluation unit (9) defines that the angle ($\beta_{ij}$) between the vector ($\bar{n}_i$) of the geometry element and the vector ($\bar{s}_j$) of the probe shaft as 180˚ +/- $\varepsilon$ or 0˚ +/- $\varepsilon$, where it is possible for $\varepsilon$ to assume a value between 0˚ and 90˚.

9. Coordinate measuring instrument according to one of the preceding claims, **characterized in that**, during the scanning of the geometry element using a probe shaft not ascertained as suitable, the control and evaluation unit (9) converts the measurement points scanned using the probe shaft not ascertained as suitable for the probe shaft ascertained as suitable.

10. Coordinate measuring instrument according to one of the preceding claims, **characterized in that** the control and evaluation unit (9) measures the geometry element with the probe shaft ascertained as suitable.

11. Coordinate measuring instrument according to one of the preceding claims, **characterized in that** the control and evaluation unit (9) outputs an error message in the case when no suitable probe shaft is found.

12. Method for measuring workpieces using a coordinate measuring instrument, with at least one probe pin (12) which can be fixed to a probe head (5) which can be displaced in the coordinate directions (x, y, z), the probe pin or the probe pins (12) having shafts (14a-14e) to whose ends in each case one scanning element (13a-13e) is fixed, and at least two of the shafts having a different alignment if the relevant probe pin (12) or the relevant probe pins are fixed to the probe head (5) in an appropriate manner, **characterized by** the following method steps:

   - determining at least one characteristic directional information item ($\bar{n}_i$) for the points to be measured of a geometry element (29-32) to be measured on the workpiece (7, 15, 16) either from measured measurement points ($P_1$-$P_4$) or predefined desired data of the geometry element,
   - ascertaining one or more probe shafts (14a-14e) which are suitable for measuring the measurement points of the geometry element (7, 15, 16) from said directional information ($\bar{n}_i$).

13. Method according to Claim 12, **characterized in that** at least one vector ($\bar{n}_i$) is ascertained as directional information item for the geometry element.

14. Method according to Claim 13, **characterized in that** each of the probe shafts (14a-14e) is also assigned a vector ($\bar{n}_j$), which points in the longitudinal direction of the probe shaft.

15. Method according to one of Claims 12 to 14, **characterized in that** a probe shaft (14a-14e) is ascertained as suitable whose longitudinal direction encloses a defined angle ($\beta_{ij}$) with the directional information item ($\bar{n}_i$) of the geometry element.

16. Method according to Claim 15, **characterized in that** the angle ($\beta_{ij}$) must lie within a predefined angular range ($\beta_{ij}$+/-$\varepsilon$).

17. Method according to Claim 16, **characterized in that** the angle ($\beta_{ij}$) between the vector ($\bar{n}_i$) of the geometry element and the vector of the probe shaft is 180˚ +/- $\varepsilon$ or 0˚ +/- $\varepsilon$, where it is possible for $\varepsilon$ to assume a value between 0˚ and 90˚.

18. Method according to one of Claims 13 to 17, **characterized in that** for external elements the vector ($\bar{n}_{Aj}$) of the geometry element (29, 30, 32) is the surface normal of the geometry element at at least one point of the geometry element.

19. Method according to one of Claims 13 to 18, **characterized in that** for internal elements the vector ($\bar{n}_{Ii}$) of the geometry element (31) is a vector in the direction of the main axis of the geometry element.

20. Method according to one of the preceding Claims 12 to 19, **characterized in that**, during the scanning of the geometry element using a probe shaft not ascertained as suitable, the measurement points ($P_1$-$P_4$) scanned using the probe shaft not ascertained as suitable are converted for the probe shaft ascertained as suitable.

21. Method according to one of Claims 12 to 20, **characterized in that** the geometry element is measured using the probe shaft ascertained as suitable.

22. Method according to one of Claims 12 to 21, **characterized in that** an error message is output in the case when no suitable probe shaft is found.


**Revendications**

1. Appareil de mesure de coordonnées de pièces (7, 15, 16) comprenant au moins une broche de palpage (6, 12) qui peut être fixée à une tête de palpage (5) déplaçable dans les directions des coordonnées (x, y, z), la ou les broches de palpage (6, 12) présentant des tiges (14a - 14e) aux extrémités desquelles est à chaque fois fixé un corps de palpage (13a - 13e) et au moins deux des tiges, lorsque la broche de palpage (12) concernée ou les broches de palpage concernées sont fixées en toute conformité à la tête de palpage (5), présentant une orientation différente, et comprenant une unité de commande et d'interprétation (9) pour commander le déroulement de la mesure et pour interpréter les points de mesure ainsi enregistrés, **caractérisé en ce que** l'unité de commande et d'interprétation (9) présente des moyens qui conviennent pour déterminer au moins une information directionnelle caractéristique ($\bar{n}_i$) pour les points à mesurer d'un élément géométrique (29, 30, 31, 32) à mesurer sur la pièce (7, 15, 16) soit à partir des points de mesure mesurés ($P_1$ - $P_4$), soit à partir de données de consigne prédéfinies de l'élément géométrique, et une ou plusieurs tiges de palpeur (14a

   - 14e) qui est ou sont appropriées pour la mesure des points de mesure de l'élément géométrique (29, 30, 31, 32) sont déterminées à partir de la ou des dites informations directionnelles ($\bar{n}_i$).

2. Appareil de mesure de coordonnées selon la revendication 1, **caractérisé en ce que** l'unité de commande et d'interprétation (9) détermine au moins un vecteur ($\bar{n}_i$) comme information directionnelle pour l'élément géométrique.

3. Appareil de mesure de coordonnées selon la revendication 2, **caractérisé en ce que** l'unité de commande et d'interprétation (9) affecte également à chacune des tiges de palpeur (14a - 14e) un vecteur ($\bar{s}_j$) qui est orienté dans le sens longitudinal de la tige de palpeur.

4. Appareil de mesure de coordonnées selon l'une des revendications 1 à 3, **caractérisé en ce que** l'unité de commande et d'interprétation (9) constate qu'une tige de palpeur est appropriée lorsque son sens longitudinal forme un angle ($\beta_{ij}$) donné avec l'information directionnelle ($\bar{n}_i$) de l'élément géométrique.

5. Appareil de mesure de coordonnées selon la revendication 4, **caractérisé en ce que** l'unité de commande et d'interprétation (9) suppose que l'angle ($\beta_{ij}$) se trouve dans une plage angulaire prédéfinie ($\beta_{ij}\pm\varepsilon$).

6. Appareil de mesure de coordonnées selon l'une des revendications 2 à 5, **caractérisé en ce que** l'unité de commande et d'interprétation (9) utilise comme vecteurs ($\bar{n}_{Aj}$) de l'élément géométrique (29, 30, 32), dans le cas des éléments extérieurs, la normale à la surface en au moins un point de l'élément géométrique.

7. Appareil de mesure de coordonnées selon l'une des revendications 2 à 6, **caractérisé en ce que** l'unité de commande et d'interprétation (9) utilise comme vecteurs ($\bar{n}_{Ii}$) de l'élément géométrique (31), dans le cas des éléments intérieurs, le vecteur qui est orienté en direction de l'axe principal ($a_z$) de l'élément géométrique.

8. Appareil de mesure de coordonnées selon l'une des revendications 5 à 7, **caractérisé en ce que** l'unité de commande et d'interprétation (9) définit l'angle ($\beta_{ij}$) entre le vecteur ($\bar{n}_j$) de l'élément géométrique et le vecteur ($\bar{s}_j$) de la tige de palpeur égal à $180°\pm\varepsilon$ ou égal à $0°\pm\varepsilon$, $\varepsilon$ pouvant prendre une valeur entre 0 et 90°.

**9.** Appareil de mesure de coordonnées selon l'une des revendications précédentes, **caractérisé en ce que** l'unité de commande et d'interprétation (9), lors du palpage de l'élément géométrique avec une tige de palpage non constatée appropriée, convertit les points de mesure palpés avec la tige de palpeur constatée non appropriée sur la tige de palpeur constatée appropriée.

**10.** Appareil de mesure de coordonnées selon l'une des revendications précédentes, **caractérisé en ce que** l'unité de commande et d'interprétation (9) mesure l'élément géométrique avec la tige de palpage constatée appropriée.

**11.** Appareil de mesure de coordonnées selon l'une des revendications précédentes, **caractérisé en ce que** l'unité de commande et d'interprétation (9) délivre un message d'erreur dans le cas où aucune tige de palpage appropriée n'est trouvée.

**12.** Procédé de mesure de pièces sur un appareil de coordonnées comprenant au moins une broche de palpage (12) qui peut être fixée à une tête de palpage (5) déplaçable dans les directions des coordonnées (x, y, z), la ou les broches de palpage (12) présentant des tiges (14a - 14e) aux extrémités desquelles est à chaque fois fixé un corps de palpage (13a - 13e) et au moins deux des tiges, lorsque la broche de palpage (12) concernée ou les broches de palpage concernées sont fixées en toute conformité à la tête de palpage (5), présentant une orientation différente, **caractérisé par** les étapes suivantes :

- Détermination d'au moins une information directionnelle caractéristique ($\bar{n}_i$) pour les points à mesurer d'un élément géométrique (29 - 32) à mesurer sur la pièce (7, 15, 16) soit à partir des points de mesure mesurés ($P_1$ - $P_4$), soit à partir de données de consigne prédéfinies de l'élément géométrique,
- Détermination à partir de la ou des dites informations directionnelles ($\bar{n}_i$) d'une ou plusieurs tiges de palpeur (14a - 14e) qui est ou sont appropriées pour la mesure des points de mesure de l'élément géométrique (7, 15, 16).

**13.** Procédé selon la revendication 12, **caractérisé en ce qu'**au moins un vecteur ($\bar{n}_i$) est déterminé comme information directionnelle pour l'élément géométrique.

**14.** Procédé selon la revendication 13, **caractérisé en ce qu'**à chacune des tiges de palpeur (14a - 14e) est affecté un vecteur ($\bar{s}_j$) qui est orienté dans le sens longitudinal de la tige de palpeur.

**15.** Procédé selon l'une des revendications 12 à 14, **caractérisé en ce qu'**une tige de palpeur (14a - 14e) est constatée appropriée lorsque son sens longitudinal forme un angle ($\beta_{ij}$) donné avec l'information directionnelle ($\bar{n}_i$) de l'élément géométrique.

**16.** Procédé selon la revendication 15, **caractérisé en ce que** l'angle ($\beta_{ij}$) doit se trouver dans une plage angulaire prédéfinie ($\beta_{ij} \pm \varepsilon$).

**17.** Procédé selon la revendication 16, **caractérisé en ce que** l'angle ($\beta_{ij}$) compris entre le vecteur ($\bar{n}_j$) de l'élément géométrique et le vecteur de la tige de palpeur est égal à 180˚$\pm \varepsilon$ ou égal à 0˚$\pm \varepsilon$, ($\varepsilon$) pouvant prendre une valeur entre 0 et 90˚.

**18.** Procédé selon l'une des revendications 13 à 17, **caractérisé en ce que** le vecteur ($\bar{n}_{Aj}$) de l'élément géométrique (29, 30, 32), dans le cas des éléments extérieurs, est la normale à la surface de l'élément géométrique en au moins un point de l'élément géométrique.

**19.** Procédé selon l'une des revendications 13 à 18, **caractérisé en ce que** le vecteur ($\bar{n}_{Ii}$) de l'élément géométrique (31), dans le cas des éléments intérieurs, est un vecteur qui est orienté en direction de l'axe principal de l'élément géométrique.

**20.** Procédé selon l'une des revendications précédentes 12 à 19, **caractérisé en ce que** lors du palpage de l'élément géométrique avec une tige de palpage non constatée appropriée, les points de mesure ($P_1$ - $P_4$) palpés avec la tige de palpeur constatée non appropriée sont convertis sur la tige de palpeur constatée appropriée.

**21.** Procédé selon l'une des revendications précédentes 12 à 20, **caractérisé en ce que** l'élément géométrique est mesuré avec la tige de palpage constatée appropriée.

**22.** Procédé selon l'une des revendications 12 à 21, **caractérisé en ce qu'**un message d'erreur est délivré dans le cas où aucune tige de palpage appropriée n'est trouvée.

# FIG.1

# FIG.2

# FIG.3

## FIG.4

## FIG.5

**FIG.6**

**FIG.7**

**FIG.8**

# FIG.9

Start — 17

Messpunkte antasten — 18

Geometrieelement neu berechnen — 19

Geometrie vollständig ? — 20

nein

ja

geeigneten Tasterschaft berechnen — 21

Aktueller Taster-schaft richtig? — 22

ja

Ende — 23

nein

Tasterschaft automatisch umschalten — 24

Meßpunkte neu umrechnen — 25

**FIG.10**

**FIG.11**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5491638 A